# EUROPEAN PATENT APPLICATION

(11) **EP 4 379 848 A1**
(43) Date of publication of application: **05.06.2024**
(21) Application number: 22849241.9
(22) Date of filing: 12.07.2022
(51) Int. Cl.: H01M 4/133, H01M 4/36, H01M 4/38, H01M 4/587

(54) **NEGATIVE ELECTRODE FOR SECONDARY BATTERY, AND SECONDARY BATTERY**

(30) Priority: 30.07.2021 JP 2021126168
(71) Applicant: Panasonic Intellectual Property Management Co., Ltd., Kadoma-shi, Osaka 571-0057 (JP)
(72) Inventor: KURODA Yuta, Kadoma-shi, Osaka 571-0057 (JP); SATO Yosuke, Kadoma-shi, Osaka 571-0057 (JP); KATO Keiko, Kadoma-shi, Osaka 571-0057 (JP)
(74) Representative: Novagraaf International SA
(86) International application number: PCT/JP2022/027389
(87) International publication number: WO 2023/008177

(57) **Abstract**

A negative electrode for a secondary battery includes a negative electrode current collector and a negative electrode mixture layer including a negative electrode active material, wherein the negative electrode active material includes carbon particles and Si-containing particles, and in a distribution in a plane direction of the negative electrode mixture layer of a presence probability of Si element in a thickness direction of the negative electrode mixture layer, a difference of an upper limit value Rmax and a lower limit value Rmin in a 1σ region: Rmax - Rmin is 20% or less.

## Description

### [Technical Field]

The present disclosure relates to a negative electrode for a secondary battery and a secondary battery.

### [Background Art]

Patent Literature 1 proposes a lithium secondary battery including a negative electrode, a positive electrode, and a nonaqueous electrolyte, the negative electrode including a negative electrode mixture layer and a negative electrode current collector, and the negative electrode mixture layer including a material including silicon as a negative electrode active material, a negative electrode conductive agent, and a negative electrode binder, and the negative electrode mixture layer being sintered and disposed on the negative electrode current collector, wherein the average particle size before charging of the negative electrode active material is set to 5.0 µm or more and 15.0 µm or less, a graphite material is used as the negative electrode conductive agent, the graphite material has an average particle size of 2.5 µm or more and 15.0 µm or less, the amount of the graphite material added to the negative electrode active material is set to 3 mass% or more and 20 mass% or less, and the theoretical capacity ratio of the positive electrode relative to the negative electrode is 1.0 or less.

### [Citation List]

### [Patent Literature]

[PLT 1]
Japanese Laid-open Patent Publication No. 2007-73334

### [Summary of Invention]

### [Technical Problem]

Patent Literature 1 mainly aims to provide a lithium secondary battery that can improve initial charge and discharge efficiency and further improve charge and discharge cycle characteristics. To improve cycle characteristics of a secondary battery having a negative electrode containing silicon (Si), further improvement in the negative electrode is required.

### [Solution to Problem]

An aspect of the present disclosure relates to a negative electrode for a secondary battery including a negative electrode current collector, and a negative electrode mixture layer including a negative electrode active material, wherein the negative electrode active material includes carbon particles and Si-containing particles, and in a distribution in a plane direction of the negative electrode mixture layer of a presence probability of Si element in a thickness direction of the negative electrode mixture layer, a difference of an upper limit value Rmax and a lower limit value Rmin in a 1σ region: Rmax - Rmin is 20% or less.

Another aspect of the present disclosure relates to a secondary battery including a positive electrode, the above-described negative electrode, and a nonaqueous electrolyte.

### [Advantageous Effects of Invention]

With the present disclosure, cycle characteristics of a secondary battery having a negative electrode containing silicon (Si) can be improved.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

[FIG. 1] FIG. 1 is a partially cutaway oblique view of a nonaqueous secondary battery in an embodiment of the present disclosure.
[FIG. 2] FIG. 2 is a schematic image showing a method for determining a distribution in the plane direction of the negative electrode mixture layer of a presence probability of Si elements in the thickness direction of the negative electrode mixture layer.

### [Description of Embodiments]

In the following, embodiments of the negative electrode for a secondary battery and the secondary battery of the present disclosure are described with reference to examples, but the present disclosure is not limited to the examples described below. In the description below, specific numeral values and materials are given as examples, but other numeral values and materials can be used as long as effects of the present disclosure can be achieved. In this specification, the phrase "numeral value A to numeral value B" means to include the numeral value A and the numeral value B, and can be read as "the numeral value A or more and the numeral value B or less". In the description below, when a lower limit and an upper limit of numeral values relating to specific physical properties and conditions are exemplified, any of the exemplified lower limits and any of the exemplified upper limits can be paired arbitrarily unless the lower limit equals the upper limit or more. When a plurality of materials are given as examples, one of them can be selected and used singly, or two or more can be used in combination.

The present disclosure includes a combination of two or more of the items described in claims arbitrarily selected from the plurality of claims in the appended Claims. That is, as long as there is no technical contradiction, two or more items described in claims arbitrarily selected from the plurality of claims in the appended Claims can be combined.

A negative electrode for a secondary battery of the present disclosure includes a negative electrode current collector and a negative electrode mixture layer including a negative electrode active material. The negative electrode current collector is composed of a sheet conductive material. The negative electrode mixture layer is supported on one or both surfaces of the negative electrode current collector. The negative electrode mixture layer generally is a layer (including coating or film) formed of a negative electrode mixture. The negative electrode mixture contains the negative electrode active material as an essential component. The negative electrode active material may be a material that reversibly exhibits a capacity by storing and releasing lithium ions. The negative electrode active material contains carbon particles and Si-containing particles. The negative electrode active material may contain a material other than the carbon particles and Si-containing particles, but the carbon particles and Si-containing particles in total are the main components. For example, 50 mass% or more, or 60 mass% or more (e.g., 70 mass% or more or may be 80 mass% or more) of the negative electrode active material may be the carbon particles and Si-containing particles.

The carbon particles may be crystalline or noncrystalline, or may include a crystalline region and a noncrystalline region. The carbon particles may have electrical conductivity. Examples of crystalline carbon particles A include graphite, and a composite of graphite and amorphous carbon. Graphite may be natural graphite or artificial graphite. The amorphous carbon may be a hard carbon or a soft carbon, or something else. Graphite means carbon particles having an average interplanar spacing d002 measured by the X-ray diffraction method of (002) plane of 0.340 nm or less. In the case of amorphous carbon, with the X-ray diffraction method (XRD), generally, only a halo pattern is observed. In the case of amorphous carbon, generally, peaks assignable to the (101) plane and the (100) plane are not observed.

The Si-containing particles are particles containing silicon (Si), and a part of the Si-containing particles is generally composed of a silicon phase which exhibits an electrochemical capacity. The Si-containing particles may be Si simple substance, a Si alloy, or a Si compound, or may be a composite material including a lithium ion conductive phase and a silicon phase (e.g., silicon particles) dispersed in the lithium ion conductive phase. In the composite material, the silicon phase is preferably fine as much as possible. The composite material is suitable for suppressing direct contact between the silicon phase and the liquid electrolyte or nonaqueous electrolyte, and allowing the negative electrode to have a high capacity.

In a distribution in the plane direction of the negative electrode mixture layer of the presence probability R of Si element in the thickness direction of the negative electrode mixture layer, a difference of an upper limit value Rmax and a lower limit value Rmin in the 1σ region: Rmax - Rmin is 20% or less. For example, by allowing the Si-containing particles and the carbon particles to be present in a mixed state as homogenous as possible, and by dispersing the fine silicon phase in the lithium ion conductive phase as homogenous as possible, the Rmax - Rmin can be controlled to 20% or less, even 18% or less, or 17% or less.

The presence probability R of Si element in the thickness direction of the negative electrode mixture layer may be determined as a ratio (R = LB/T) of a total length LB of a portion crossing the Si element of a straight line parallel to the thickness direction of the negative electrode mixture relative to a thickness T of the negative electrode mixture layer. The distribution of the presence probability R in the plane direction of the negative electrode mixture layer can be measured with one or more cross sections obtained by cutting the negative electrode mixture layer with the negative electrode current collector along the thickness direction of the negative electrode. Specifically, the distribution of the presence probability R can be determined by the following method.

### (1) Capturing cross section of negative electrode by scanning electron microscope (SEM)

First, a negative electrode whose image is to be captured is prepared. Then, the negative electrode mixture layer and the negative electrode current collector are cut together along the thickness direction of the negative electrode to form a cross section. At that time, a thermosetting resin may be filled in the negative electrode mixture layer and cured. For example, the above-described cross section of the negative electrode can be obtained by a CP (cross section polisher) method, a FIB (focused ion beam) method, and the like. The cross section sample is observed with SEM. The SEM observation is performed with a low magnification (e.g., 200 to 1000 times). The SEM images are captured so that a region of a length of 300 µm or more (preferably 400 µm or more) in the plane direction of the negative electrode mixture layer is observed.

The negative electrode to be measured is taken out from a secondary battery with a depth of discharge (DOD) of 90% or more. The depth of discharge (DOD) means a ratio of a discharged amount of electricity relative to the rated amount of electricity of a fully charged battery. The charged amount of electricity when a battery in a completely discharged state (DOD = 100%) is charged to a fully charged state (SOC = 100%, DOD = 0%) (i.e., the amount of fully charged electricity) corresponds to the rated capacity. The battery voltage in the fully charged state corresponds to a charge termination voltage. The battery voltage in the completely discharged state corresponds to a discharge termination voltage.

### (2) Elemental analysis with Energy Dispersive X-ray Spectroscopy (EDX)

Elemental analysis is performed with EDX using SEM images of the cross section of the negative electrode.

### (3) Silicon phase mapping

A Si element map is obtained by extracting components derived from Si element from EDX analysis data of the negative electrode cross section. In this manner, all the components derived from Si element in the negative electrode mixture layer can be counted.

### (4) Measurement of distribution of presence probability R

The obtained Si element map is expressed as a two-dimensional image defined by a thickness direction and an arbitrary plane direction of the negative electrode mixture. In such a Si element map, when a plurality of straight lines parallel to the thickness direction of the negative electrode mixture layer are drawn along the above-described plane direction with, for example, a 5 µm pitch, the straight lines may have a portion crossing the Si element (component derived from Si element). In the straight lines, the ratio R (= LB/T) of a total length LB of a portion crossing the Si element relative to the thickness T of the negative electrode mixture layer represents a presence probability R of Si element in the plane direction of the negative electrode mixture layer at an arbitrary point.

When the presence probability R is measured at a predetermined pitch along with the above-described plane direction in the Si element map, a distribution of the presence probability R in the above-described plane direction can be obtained. In the SEM image, when the length in the plane direction of the negative electrode mixture layer is, for example, 300 µm and the above-described predetermined pitch is 5 µm, the presence probabilities R of 300/5 = 60 points are obtained, and a distribution can be drawn of the presence probabilities R of 60 points.

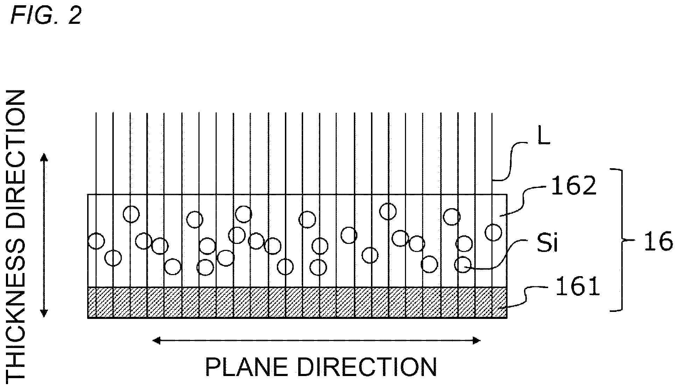

FIG. 2 schematically shows an example of a cross section of a negative electrode 16 when a negative electrode current collector 161 and a negative electrode mixture layer 162 are cut together. In FIG. 2, the Si element map is represented as a two-dimensional image, with the thickness direction of the negative electrode mixture layer 162 as the vertical axis, and an arbitrary plane direction as the horizontal axis. A plurality of straight lines L are straight lines parallel to the thickness direction of the negative electrode mixture layer 162, and are drawn at a predetermined pitch along the plane direction. Each of the straight lines L may include a portion crossing the Si element (component derived from Si element) dispersed in the negative electrode mixture layer 162, and therefore for every straight line L, a ratio R (= LB/T) of a total length LB of a portion crossing Si relative to the thickness T of the negative electrode mixture layer can be determined as a presence probability R of Si. In the example shown, 24 straight lines are drawn, and therefore 24 presence probabilities R are obtained, and distribution of the 24 presence probabilities R can be drawn.

In the obtained distribution, the smaller the difference of an upper limit value Rmax and a lower limit value Rmin in the 1σ region: Rmax - Rmin, the more even the presence of the Si in the plane direction of the negative electrode, and the more leveled the degree of expansion and contraction due to charge and discharge of the negative electrode, which is advantageous for charge and discharge cycle characteristics. Specifically, with a Rmax - Rmin of 20% or less, charge and discharge cycle characteristics improve significantly. At this time, the Si-containing particles and the carbon particles are considered to be present far homogeneously in a mixed state.

The 1σ region is a region from µ -σ to µ+ α in a distribution function, setting the horizontal axis to a presence probability R and the vertical axis to a frequency, and µ is an average of the presence probability R. σ is a standard deviation of a distribution function.

In order to make the Rmax - Rmin 20% or less, increasing the affinity between the carbon particles and the Si-containing particles is effective. The higher the affinity between the carbon particles and the Si-containing particles, the easier the carbon particles and the Si-containing particles can be present homogeneously in a mixed state. The affinity between the carbon particles A and the Si-containing particles B can be evaluated, for example, by using a DBP (dibutyl phthalate) absorption as an index. Specifically, the ratio of the DBP absorption of the Si-containing particles (DBPB) relative to the DBP absorption of the carbon particles (DBPA): DBPB/DBPA may be 1.0 or less. The DBPB/DBPA ratio may be 0.9 or more and 1.0 or less, or 0.95 or more and less than 1.0 (e.g., 0.99 or less).

The DBP absorption can be measured using a measurement device (e.g., S -500 manufactured by Asahisouken Corporation) in accordance with JIS K6217-4 (ISO4656).

In the negative electrode active material, the carbon particle content may be 70 mass% or more and 95 mass% or less, and the Si-containing particle content may be 5 mass% or more and 30 mass% or less. In an attempt to obtain excellent cycle characteristics and high capacity in good balance, the Si-containing particle content of the negative electrode active material is, for example, 0.5 mass% or more, or may be 1 mass% or more, or 2 mass% or more. When focusing more on improvement in cycle characteristics, the Si-containing particle content of the negative electrode active material may be, for example, 20 mass% or less, 15 mass% or less, or 10 mass% or less.

The Si-containing particles may contain first particles including a carbon phase, and a silicon phase dispersed in the carbon phase. The first particles are particles of a composite material of a carbon phase and a silicon phase. The carbon phase may be composed of, for example, an amorphous carbon. The carbon phase does not have to contain crystalline carbon. In this case, in a profile measured by X-ray diffraction, a peak assigned to crystalline carbon is not observed, and a halo pattern assigned to amorphous carbon is observed. In the first particles, the silicon phase content can be arbitrarily changed, and therefore a high capacity negative electrode can be easily designed.

The amorphous carbon may be, for example, hard carbon, soft carbon, or something else. The amorphous carbon can be produced by, for example, sintering a carbon source in an inert atmosphere, and grinding the produced sintered product.

The first particles can be produced, for example, by mixing a carbon source and Si particles, and milling the mixture in a mixer such as a ball mill and the like, and thereafter, baking the mixture in an inert atmosphere. For the carbon source, for example, petroleum resins such as coal pitch, petroleum pitch, and tar; saccharides or water-soluble resins such as carboxymethylcellulose (CMC), polyvinylpyrrolidone, cellulose, and sucrose can be used. When mixing the carbon source with the Si particles, for example, the carbon source and the Si particles can be dispersed in a dispersion medium such as alcohol. The milled mixture is dried, and heated in an inert gas atmosphere at, for example, 600 °C or more and 1000 °C or less to carbonize the carbon source to form a carbon phase. The carbon phase formed as described is amorphous carbon not including crystalline carbon.

The silicon phase dispersed in the carbon phase is generally formed with a plurality of crystallites. The crystallite size of the silicon phase is, for example, 500 nm or less, or may be 30 nm or less. The lower limit value of the crystallite size of the silicon phase is not particularly limited, and for example, 5 nm or more. The crystallite size is calculated by the Sheller's equation from the half width of the diffraction peak assigned to the Si (111) plane in the X-ray diffraction (XRD) pattern of the silicon phase.

The silicon phase content of the first particles is, for example, 35 mass% or more, or may be 45 mass% or more, 50 mass% or more, or 65 mass% or more. The silicon phase content of the first particles is, for example, 80 mass% or less, or may be 75 mass% or less, 70 mass% or less, or 65 mass% or less. In a range determined by the above-described upper limits and the lower limits that are arbitrarily selected from the above, a higher battery capacity and improvement in cycle characteristics both can be easily achieved.

The silicon phase content of the first particles can be measured by Si -NMR. In the following, preferable Si-NMR measurement conditions are shown.

### Measuring equipment: Solid-state nuclear magnetic resonance spectrometer (INOVA 400) manufactured by Varian Medical Systems

Probe: Varian 7 mm CPMAS-2
MAS: 4.2 kHz
MAS speed: 4 kHz
Pulse: DD (45° pulse + signal acquisition time 1H decoupled)
Repetition time: 1200 sec
Observation width: 100 kHz
Observation center: -near 100 ppm
Signal acquisition time: 0.05 sec
Accumulation count: 560
Sample volume: 207.6 mg

The first particles may have an average particle size of, for example, 1 to 20 µm, and preferably 2 to 12 µm. In such a range, the stress due to the volume change of the first particles along with charge and discharge can be relieved easily, and excellent cycle characteristics can be obtained easily.

The average particle size of the first particles means the particle size at which cumulative volume is 50% in the particle size distribution (volume average particle size) measured by the laser diffraction scattering method. For example, "LA-750" manufactured by Horiba Corporation can be used as the measuring device.

The average particle size of the first particles can be obtained from the cross section samples of the negative electrode formed to obtain SEM images. Equivalent circle diameters of the cross sections of ten or more particles B1 are obtained, and their average value is obtained as an average particle size. The equivalent circle diameter is a diameter of a circle having the same area as the area of the particles observed in the cross sections of the negative electrode.

The Si-containing particles may contain second particles having a silicate phase, and a silicon phase dispersed in the silicate phase. The second particles are particles of a composite material of a silicate phase and a silicon phase. In the second particles, the silicon phase content can be arbitrarily changed, and therefore a high capacity negative electrode can be easily designed.

The silicate phase may contain, for example, at least one selected from the group consisting of Group 1 element and Group 2 element of the long-form periodic table. Examples of the Group 1 element and Group 2 element of the long-form periodic table include lithium (Li), potassium (K), sodium (Na), magnesium (Mg), calcium (Ca), strontium (Sr), and barium (Ba). Other elements such as aluminum (Al), boron (B), lanthanum (La), phosphorus (P), zirconium (Zr), and titanium (Ti) may be contained. In particular, the silicate phase containing lithium (hereinafter also referred to as a lithium silicate phase) is preferable because of its small irreversible capacity and high initial charge and discharge efficiency. That is, the second particles may contain a lithium silicate phase, and a silicon phase dispersed in the lithium silicate phase.

The lithium silicate phase may be any oxide phase containing lithium (Li), silicon (Si), and oxygen (O), and may contain other elements. The atomic ratio of O to Si in the lithium silicate phase: O/Si is, for example, larger than 2 and less than 4. In this case, it is advantageous in terms of stability and lithium ion conductivity. Preferably, O/Si is larger than 2 and less than 3. The atomic ratio of Li to Si in the lithium silicate phase: Li/Si is, for example, larger than 0 and less than 4. Examples of the elements other than Li, Si, and O that may be contained in the lithium silicate phase include iron (Fe), chromium (Cr), nickel (Ni), manganese (Mn), copper (Cu), molybdenum (Mo), zinc (Zn), and aluminum (Al).

The lithium silicate phase may have a composition represented by a formula: Li_{2z}SiO_{2+z} (0 < z < 2). In view of stability, workability, and lithium ion conductivity, etc., z preferably satisfies a relation 0 < z < 1, and z=1/2 is more preferable.

The silicon phase dispersed in the silicate phase is generally composed of a plurality of crystallites. The crystallite size of the silicon phase is, for example, 500 nm or less, or may be 30 nm or less. The lower limit value of the crystallite size of the silicon phase is not particularly limited, and for example, 5 nm or more. The crystallite size can be measured in accordance with the manners as in the case of the first particles.

The silicon phase content of the second particles is, for example, 40 mass% or more, or may be 45 mass% or more, 50 mass% or more, or 65 mass% or more. The silicon phase content of the second particles is, for example, 80 mass% or less, or may be 75 mass% or less, 70 mass% or less, or 65 mass% or less. In a range arbitrarily selected from the above-described upper limits and the lower limits, a higher battery capacity and improvement in cycle characteristics both can be easily achieved. The silicon phase content of the second particles can be measured in accordance with the manners as in the case of the first particles.

The second particles have an average particle size of, for example, 1 to 20 µm, preferably 5 to 12 µm. In the above-described particle size range, the stress due to the volume change of the second particles along with charge and discharge can be relieved easily, and excellent cycle characteristics can be obtained easily. The average particle size of the second particles can be measured in accordance with the manners as in the case of the first particles.

The first particles and the second particles are excellent in that they have a small irreversible capacity. This is because the carbon phase and the silicate phase have less sites that trap lithium ions irreversibly. By using the first particles, and further using the second particles, excellent charge and discharge efficiency can be achieved. The effects are prominent particularly at the initial stage of charge and discharge.

The compositions of the first particles and the second particles can be analyzed by, for example, the following method. First, the battery is disassembled, the negative electrode is taken out and washed with a nonaqueous solvent such as ethylene carbonate; after dried, the cross sections of the negative electrode mixture layer are processed with a cross section polisher (CP) to obtain a sample. Reflected electron images of cross sections of the sample are obtained by field emission scanning electron microscopy (FE-SEM), and the cross section is observed. An Auger electron spectroscopy (AES) analyzer can be used to perform qualitative/quantitative analysis on the elements of the observed particles (acceleration voltage 10 kV, beam electric current 10 nA).

The carbon particles may contain two or more kinds of particles having different particle internal porosities. This allows control of the structural strength of the negative electrode mixture layer and liquid flowability of the liquid electrolyte or the nonaqueous electrolyte in the negative electrode mixture layer easily, which allows improvement in cycle characteristics easily. The carbon particles may contain, for example, third particles with a particle internal porosity of 5% or less, and fourth particles with a particle internal porosity of 8% or more and 20% or less.

The particle internal porosity of the carbon particles (third and fourth particles) can be obtained from the cross section samples of the negative electrode formed to obtain SEM images. In the cross sectional images of the carbon particles, the carbon portion and the gap portion are distinguished by image processing, and their areas are obtained. The ratio of the area of the gap portion relative to a total of the carbon portion area and the gap portion area is the particle internal porosity. However, the particle internal porosity is an average value obtained from predetermined ten or more carbon particles. When the particle internal porosity of the third particles is to be obtained, an average value of the particle internal porosities of ten or more third particles is obtained. When the particle internal porosity of the fourth particles is to be obtained, an average value of the particle internal porosities of ten or more fourth particles is obtained. However, a distinction is made: the carbon particles with a particle internal porosity of 6.5% or less are the third particles, and the carbon particles with a particle internal porosity of more than 6.5% are the fourth particles.

The third particles may be crystalline or noncrystalline, or may include a crystalline region and a noncrystalline region. The third particles may be, for example, graphite, hard carbon, or soft carbon. The average particle size of the third particles may be, for example, 5 to 50 µm, and preferably 12 to 20 µm. The average particle size of the third particles can be measured in accordance with the manners as in the case of the first particles.

The fourth particles may be crystalline or noncrystalline, or may include a crystalline region and a noncrystalline region. The fourth particles may be, for example, graphite, hard carbon, or soft carbon. The average particle size of the fourth particles may be, for example, 5 to 50 µm, and preferably 15 to 30 µm. The average particle size of the fourth particles can be measured in accordance with the manners as in the case of the first particles. At least one of the third particles and the fourth particles may contain amorphous carbon, but in view of a higher capacity and improvement in cycle characteristics, the third particles and the fourth particles are preferably both graphite.

In view of liquid flowability of the liquid electrolyte or the nonaqueous electrolyte, the third particle content of the carbon particles is 10 mass% or more and 80 mass% or less, or 10 mass% or more and 50 mass% or less, or may be 10 mass% or more and 30 mass% or less.

When dividing the negative electrode mixture layer in the thickness direction into a first region and a second region having the same thickness, the amount of the third particles contained in the second region that is far from the negative electrode current collector is preferably more than in the first region that is near the negative electrode current collector. The third particles are densely packed, have a high strength, and are suitable for forming sufficient gaps at the surface layer portion of the negative electrode mixture layer where the negative electrode active material is easily pressed to be collapsed. By including the third particles in the second region in a relatively large amount, liquid flowability of the liquid electrolyte or the nonaqueous electrolyte in the negative electrode mixture layer can be easily improved. Meanwhile, the fourth particles have a large particle internal porosity, and therefore are suitable for forming sufficient gaps in a deep portion of the negative electrode mixture layer. By including the fourth particles in the first region in a relatively large amount, liquid flowability of the liquid electrolyte or the nonaqueous electrolyte in the negative electrode mixture layer can be further improved easily.

When the third particles are contained in a larger amount in the second region than in the first region, and sufficient gaps are formed at the surface layer portion of the negative electrode mixture layer, with significant local expansion of the negative electrode mixture layer along with charge and discharge of a secondary battery, the surface layer portion may distort, which may decrease the strength. Meanwhile, in this embodiment, the difference of an upper limit value Rmax and a lower limit value Rmin in the 1σ region: Rmax - Rmin of the presence probability R is limited to a small value, and therefore the degree of expansion and contraction by charge and discharge of the negative electrode tends to be leveled. Therefore, the strength of the surface layer portion can be easily kept.

The mass ratio of the third particles relative to the total of the third particles and the fourth particles in the second region may be, for example, 20 mass% or more and 80 mass% or less, or 30 mass% or more and 60 mass% or less, or 35 mass% or more and 50 mass% or less.

The mass ratio of the third particles relative to the total of the third particles and the fourth particles in the first region may be, for example, 0 mass% or more and 40 mass% or less, or 0 mass% or more and 30 mass% or less, or 0 mass% or more and 20 mass% or less.

Next, a secondary battery of the embodiment of the present disclosure is described. The secondary battery includes a positive electrode, a negative electrode, and a nonaqueous electrolyte. The negative electrode is the above described negative electrode. The positive electrode and the negative electrode are disposed to face each other with the separator interposed therebetween.

### [Negative electrode]

The negative electrode includes, as described above, a negative electrode mixture layer including a negative electrode active material, and a negative electrode current collector, and the negative electrode mixture layer is formed by applying a negative electrode slurry, in which the negative electrode mixture components are dispersed in a dispersion medium, on a surface of the negative electrode current collector, and drying the slurry. The dried film may be rolled, if necessary.

The negative electrode mixture contains the negative electrode active material as an essential component, and may contain a binder, a thickener, a conductive agent, and the like as optional components.

### (Negative electrode active material)

The negative electrode active material contains, as described above, carbon particles and Si-containing particles.

For the binder for the negative electrode, for example, a resin material is used. Examples of the binder include fluorine resin, polyolefin resin, polyamide resin, polyimide resin, acrylic resin, vinyl resin, and a rubber material (e.g., styrene-butadiene copolymer (SBR)). A kind of binder may be used singly, or two or more kinds thereof may be used in combination.

Examples of the thickener include cellulose derivatives such as cellulose ether. Examples of the cellulose derivative include carboxymethyl cellulose (CMC) and a modified product thereof, and methylcellulose. The thickener may be used singly, or two or more kinds thereof may be used in combination.

Examples of the conductive agent include carbon nanotube (CNT), carbon fiber other than CNT, and conductive particles (e.g., carbon black, graphite).

Examples of the dispersion medium used for the negative electrode slurry include, for example, water, alcohol, N-methyl-2-pyrrolidone (NMP), a solvent mixture thereof, although it is not limited thereto.

For the negative electrode current collector, for example, a metal foil may be used. The negative electrode current collector may be porous. Examples of the material of the negative electrode current collector may be stainless steel, nickel, a nickel alloy, copper, and a copper alloy. The negative electrode current collector has a thickness of, for example, 1 to 50 µm, or the thickness may be 5 to 30 µm, but it is not limited thereto.

### [Positive electrode]

The positive electrode contains a positive electrode active material. The positive electrode generally includes a positive electrode current collector, a layered positive electrode mixture (hereinafter, referred to as a positive electrode mixture layer) supported on the positive electrode current collector. The positive electrode mixture layer can be formed by applying a positive electrode slurry, in which the positive electrode mixture components are dispersed in a dispersion medium, on a surface of the positive electrode current collector, and drying the slurry. The dried film may be rolled, if necessary. The positive electrode mixture contains the positive electrode active material as an essential component, and may contain a binder, a thickener, and the like as optional components.

### (Positive electrode active material)

The positive electrode active material may be a material that can be used as a positive electrode active material of a nonaqueous secondary battery (particularly lithium ion secondary battery), but in view of a higher capacity, contains a lithium transition metal composite oxide including at least nickel as a transition metal (composite oxide N). The ratio of the composite oxide N in the positive electrode active material is, for example, 70 mass% or more, may be 90 mass% or more, or 95 mass% or more.

The composite oxide N may be, for example, a lithium transition metal composite oxide having a layered rock salt type structure, and including Ni and at least one selected from the group consisting of Co, Mn, and Al. In the following, the lithium transition metal composite oxide which has a layered rock salt type structure, and contains Ni and at least one selected from the group consisting of Co, Mn, and Al wherein the Ni ratio in the metal element other than Li is 80 atom % or more is also referred to as "composite oxide HN". The ratio of the composite oxide HN in the composite oxide N used as the positive electrode active material is, for example, 90 mass% or more, or may be 95 mass% or more, or 100%. The higher the Ni ratio, the more lithium ions can be taken out from the composite oxide HN during charging, which allows for a higher capacity.

Co, Mn, and Al contribute to stabilization of the crystal structure of the composite oxide HN with a high Ni content. In view of reduction in production costs, the smaller the Co content, the better, but in view of improvement in durability, Co is preferably contained in the composite oxide HN. The composite oxide HN with a small Co content (or not containing Co) may contain Mn and Al.

The Co ratio in the metal element other than Li is preferably 10 atom% or less, more preferably 5 atom% or less, or Co does not have to be contained. In view of stability of the crystal structure, the composite oxide HN may contain 1 atom% or more, or 1.5 atom% or more (e.g., 5 atom% or more) of Co.

The Mn ratio in the metal element other than Li may be 10 atom % or less, or 5 atom % or less. The Mn ratio in the metal element other than Li may be 1 atom % or more, 3 atom % or more, or 5 atom % or more. When the range is to be limited, these upper and lower limits can be combined arbitrarily.

The Al ratio in the metal element other than Li may be 10 atom% or less, or 5 atom% or less. The Al ratio in the metal element other than Li may be 1 atom% or more, 3 atom% or more, or 5 atom% or more. When the range is to be limited, these upper and lower limits can be combined arbitrarily.

The composite oxide HN is represented by, for example, a formula: Li_{α}Ni(_{1-x1-x2-y-z)}Coₓ₁Mnₓ₂Al_{y}M_{z}O_{2+β}. Element M is an element other than Li, Ni, Co, Mn, Al, and oxygen. Mn contributes to stabilization of the crystal structure of the composite oxide HN, and by including low cost Mn in the composite oxide HN, it is advantageous in reduction of costs. Al contributes to stabilization of the crystal structure of the composite oxide HN.

In the above-described formula, α representing the atomic ratio of lithium is, for example, 0.95 ≤ α ≤ 1.05. The coefficient α increases or decreases by charging and discharging. In (2+β) representing the atomic ratio of oxygen, β satisfies -0.05 ≤ β ≤ 0.05.

The coefficient 1-x1-x2-y-z(= v) representing the atomic ratio of Ni is, for example, 0.8 or more, or may be 0.85 or more, 0.90 or more, or 0.95 or more. The coefficient v may be 0.98 or less, or 0.95 or less. The coefficient x1 representing the atomic ratio of Co is, for example, 0.1 or less (0 ≤ x1 ≤ 0.1), x2 representing the atomic ratio of Mn is, for example, 0.1 or less (0 ≤ x2 ≤ 0.1), y representing the atomic ratio of Al is, for example, 0.1 or less (0 ≤ y ≤ 0.1), and z representing the atomic ratio of element M is, for example, 0 ≤ z ≤ 0.10.

Element M may be at least one selected from the group consisting of Ti, Zr, Nb, Mo, W, Fe, Zn, B, Si, Mg, Ca, Sr, Sc, and Y. In particular, when at least one selected from the group consisting of Nb, Sr, and Ca is contained in the composite oxide HN, it is assumed that the surface structure of the composite oxide HN is stabilized and the resistance decreases, and elution of metal is further suppressed. The element M that is present locally near the surface of the composite oxide HN particles is more effective.

For the binder of the positive electrode, for example, a resin material is used. Examples of the binder include fluorine resin, polyolefin resin, polyamide resin, polyimide resin, acrylic resin, and vinyl resin. A kind of binder may be used singly, or two or more kinds thereof may be used in combination.

Examples of the conductive agent include carbon nanotube (CNT), carbon fiber other than CNT, and conductive particles (e.g., carbon black, graphite).

Examples of the dispersion medium used for the positive electrode slurry include, for example, water, alcohol, N-methyl-2-pyrrolidone (NMP), a solvent mixture thereof, although it is not limited thereto.

For the positive electrode current collector, for example, a metal foil may be used. The positive electrode current collector may be porous. Examples of the porous current collector include a net, a punched sheet, and expanded metal. Examples of the material of the positive electrode current collector may be stainless steel, aluminum, an aluminum alloy, and titanium. The positive electrode current collector has a thickness of, for example, 1 to 50 µm, or the thickness may be 5 to 30 µm, but it is not limited thereto.

### [Liquid electrolyte]

The liquid electrolyte contains a solvent and a solute dissolved in the solvent. The solute is an electrolytic salt that ionically dissociates in liquid electrolytes. The solute may contain, for example, a lithium salt. The component of the liquid electrolyte other than the solvent and solute is additives. The liquid electrolyte may contain various additives.

For the solvent, an aqueous solvent or a nonaqueous solvent is used. For the nonaqueous solvent, for example, cyclic carbonate, chain carbonate, cyclic carboxylate, chain carboxylate, and the like are used. Examples of the cyclic carbonate include propylene carbonate (PC), ethylene carbonate (EC), and vinylene carbonate (VC). Examples of the chain carbonate include diethyl carbonate (DEC), ethyl methyl carbonate (EMC), and dimethyl carbonate (DMC). Examples of the cyclic carboxylate include γ-butyrolactone (GBL) and γ-valerolactone (GVL). Examples of the chain carboxylate include methyl acetate, ethyl acetate, propyl acetate, methyl propionate (MP), ethyl propionate (EP), and the like. The non-aqueous solvent may be used singly, or two or more kinds thereof may be used in combination.

Examples of the lithium salt include, a lithium salt of chlorine containing acid (LiClO₄, LiAlCl₄, LiB₁₀Cl₁₀, etc.), a lithium salt of fluorine containing acid (LiPF₆, LiPF₂O₂, LiBF₄, LiSbF₆, LiAsF₆, LiCF₃SO₃, LiCF₃CO₂, etc.), a lithium salt of fluorine containing acid imide (LiN(FSO₂)₂, LiN(CF₃SO₂)₂, LiN(CF₃SO₂)(C₄F₉SO₂), LiN(C₂F₅SO₂)₂, etc.), a lithium halide (LiCl, LiBr, LiI, etc.) and the like. The lithium salt may be used singly, or two or more kinds thereof may be used in combination.

The liquid electrolyte may have a lithium salt concentration of 1 mol/liter or more and 2 mol/liter or less, or 1 mol/liter or more and 1.5 mol/liter or less. By adjusting the lithium salt concentration within the above-described range, a liquid electrolyte with excellent ion conductivity and suitable viscosity can be produced. However, the lithium salt concentration is not limited to the above-described range.

### [Separator]

It is desirable to interpose a separator between the positive electrode and the negative electrode. The separator is excellent in ion permeability and has suitable mechanical strength and electrically insulating properties. For the separator, a microporous thin film, a woven fabric, and a nonwoven fabric can be used. For the material of the separator, a polyolefin such as polypropylene or polyethylene is preferred.

In an example structure of the non-aqueous secondary battery, an electrode group and a liquid electrolyte are accommodated in an outer package, and the electrode group has a positive electrode and a negative electrode wound with a separator interposed therebetween. However, the structure is not limited thereto, and other forms of electrode groups may be used. For example, it can be a laminate electrode group, in which a positive electrode and a negative electrode are laminated with a separator interposed therebetween. The secondary batteries may be of any form, for example, a cylindrical type, prismatic type, coin type, button type, laminated type, etc.

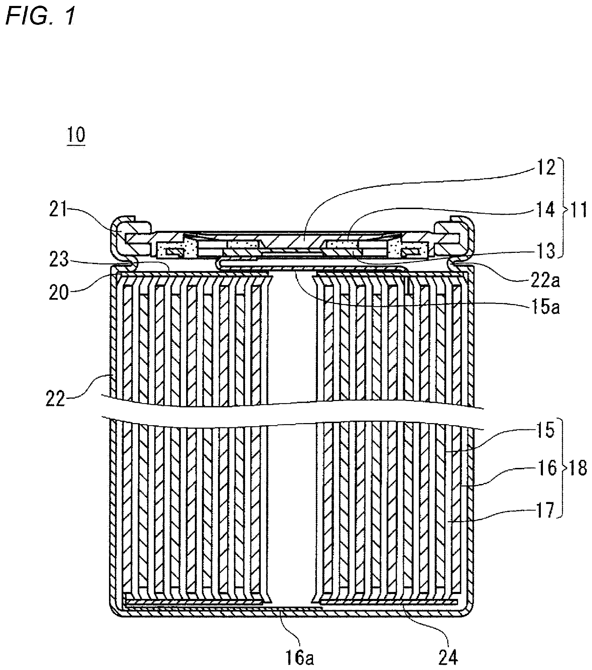

In the following, a structure of the nonaqueous secondary battery is described with reference to FIG. 1. FIG. 1 is a vertical cross sectional view of a cylindrical nonaqueous secondary battery 10 of an example of this embodiment. Note here that the present disclosure is not limited to the following configuration.

The secondary battery 10 has an electrode group 18, a liquid electrolyte (not shown), and a bottomed cylindrical battery can 22 accommodating these. A sealing body 11 is crimped and fixed to an opening of the battery can 22 with a gasket 21. In this manner, the inside of the battery is sealed. The sealing body 11 has a valve body 12, a metal plate 13, and a ring insulating member 14 interposed between the valve body 12 and the metal plate 13. The valve body 12 and the metal plate 13 are connected to each other at their center portions. A positive electrode lead 15a led out from the positive electrode plate 15 is connected to the metal plate 13. Thus, the valve body 12 functions as an external terminal of the positive electrode. A negative electrode lead 16a led out from the negative electrode plate 16 is connected to an inner bottom portion of the battery can 22. A circular step portion 22a is formed near the opening end of the battery can 22. A first insulating plate 23 is disposed between one end face of the electrode group 18 and the circular step portion 22a. A second insulating plate 24 is disposed between the other end face of the electrode group 18 and the bottom portion of the battery can 22. The electrode group 18 is formed by winding the positive electrode plate 15 and the negative electrode plate 16 with a separator 17 interposed therebetween.

The present disclosure will be described in detail below with reference to Examples and Comparative Examples. The present disclosure, however, is not limited to the following Examples.

### « Example 1 »

A nonaqueous secondary battery was made and evaluated as below.

### (1) Positive electrode production

LiNi_{0.91}Co_{0.04}Al_{0.05}O₂ was used as the positive electrode active material. By mixing 100 parts by mass of a positive electrode active material (average particle size 12 µm), 1 part by mass of carbon nanotube, 1 part by mass of polyvinylidene fluoride, and a suitable amount of NMP, a positive electrode slurry was produced. Next, the positive electrode slurry was applied on both surfaces of an aluminum foil, and the film was dried and rolled, thereby forming a positive electrode mixture layer on both surfaces of the aluminum foil to produce a positive electrode.

### (2) Negative electrode production

By mixing 90 parts by mass of first carbon particles A, 10 parts by mass of Si-containing particles B, 1 part by mass of a sodium salt of CMC (CMC-Na), 1 part by mass of SBR, and a suitable amount of water, a first negative electrode slurry was produced. The first carbon particles A contained 40 mass% of third particles A1 (average particle size 15 µm) with a particle internal porosity of 2.4%, and 60 mass% of fourth particles A2 (average particle size 18 µm) with a particle internal porosity of 12.8%.

By mixing 90 parts by mass of second carbon particles A, 10 parts by mass of Si-containing particles B, 1 part by mass of a sodium salt of CMC (CMC-Na), 1 part by mass of SBR, and a suitable amount of water, a second negative electrode slurry was produced. The second carbon particles A were all (100 mass%) fourth particles A2 (average particle size 18 µm) with a particle internal porosity of 12.8%.

The silicon-containing particles B were first particles B1 having a carbon phase and a silicon phase dispersed in the carbon phase, and a plurality of lots of the silicon-containing particles B were prepared by generally the following procedures, with different average particle sizes and silicon phase contents.

The first particles B1 were prepared by mixing pitch as a carbon source and coarse particles of Si, milling the mixture in a ball mill, and thereafter, baking the mixture in an inert atmosphere. The crystallite size of the silicon phase (silicon particles) dispersed in the carbon phase was determined by the above described method, and the crystallite size was 200 nm or less. XRD analysis was performed, and the carbon phase was amorphous carbon not including crystalline carbon.

The ratio DBPB/DBPA of the DBP absorption (DBPB) of the Si-containing particles B (first particles B1) relative to the DBP absorption (DBPA) of the first carbon particles A (third particles A1: fourth particles A2 (mass ratio) = 40: 60) was 0.93.

The second negative electrode slurry was applied on both surfaces of a copper foil as the negative electrode current collector, and the film was dried. Afterwards, the first negative electrode slurry was applied on the film of the second negative electrode slurry, dried and rolled to form a negative electrode mixture layer on both surfaces of the copper foil, thereby producing a negative electrode. The negative electrode mixture layer had a thickness of 81 µm of one side, and the first negative electrode slurry and the second negative electrode slurry were applied with the same thickness.

With the produced negative electrode, a distribution in the plane direction of the negative electrode mixture layer of a presence probability R of Si element in the thickness direction of the negative electrode mixture layer was determined, and a difference of an upper limit value Rmax and a lower limit value Rmin in the 1σ region: Rmax - Rmin was determined to be 18%. The plurality of straight lines parallel to the thickness direction of the negative electrode mixture layer drawn on the Si element map had a pitch of 5 µm.

### (3) Liquid electrolyte preparation

LiPF₆ was dissolved in a solvent mixture of FEC, EC, EMC, and DMC (FEC: EC: EMC: DMC = 10: 5: 5: 80 (volume ratio)), thereby preparing a liquid electrolyte. The liquid electrolyte had a LiPF₆ concentration of 1.3 mol/L.

### (4) Lithium ion secondary battery production

One end of a positive electrode lead made of aluminum was attached to the positive electrode. One end of a negative electrode lead made of nickel was attached to the negative electrode. The positive electrode and the negative electrode were wound with a separator made of polyethylene interposed therebetween, thereby producing an electrode body. The electrode body was dried under vacuum at 105°C for 2 hours, and then housed in a bottomed cylindrical battery case serving also as a negative electrode terminal. An iron-made case was used for the battery case. Next, a liquid electrolyte was injected into the battery case, and then the opening of the battery case was closed using a sealing body made of metal serving also as a positive electrode terminal. At this time, a resin gasket was interposed between the sealing body and the open end of the battery case. In this manner, a 21700-type cylindrical lithium ion secondary battery (battery X1) was produced.

In Table 1, X1 to X3 are batteries of Examples 1 to 3, and Y1 to Y2 are batteries of Comparative Examples 1 to 2.

### (5) Evaluation

### <Charge and discharge cycles>

The produced batteries were subjected to charge and discharge cycles with the following conditions for 50 cycles. The deterioration rate (difference of C0 and C50) of the discharge capacity C50 after 50 cycles setting the initial discharge capacity C0 as 100% was determined.

### <Charging>

Charging was performed under an environment of 25°C at a constant current of 0.2 It until the voltage reached 4.2 V, and thereafter, charging was performed at a constant voltage of 4.2 V until the electric current reached 0.02 It. The batteries were allowed to stand after the constant voltage charging for 20 minutes.

### <Discharging>

Thereafter, under an environment of 25°C, discharging was performed at a constant current of 0.2 It until the voltage reached 2.5 V.

### « Example 2 »

A battery X2 was made in the same manner as in Example 1, except that the Si-containing particles B (first particles B 1) were changed, to change the DBP absorption of the Si-containing particles B (first particles B 1) and the upper limit value Rmax and the lower limit value Rmin in the 1σ region of the distribution of the presence probability R.

### « Example 3 »

A battery X3 was made in the same manner as in Example 2, except that the mixing time for the mixture when preparing the negative electrode slurry was changed to change the upper limit value Rmax and the lower limit value Rmin in the 1σ region of the distribution of the presence probability R.

### « Comparative Example 1»

Instead of the Si-containing particles B (first particles B 1), second particles B2 including a lithium silicate phase (Li₂Si₂O₅) and a silicon phase dispersed in the lithium silicate phase were used. A battery Y1 was made in the same manner as in Example 1, except for the above.

### « Comparative Example 2»

A battery Y2 was made in the same manner as in Example 1, except that the Si-containing particles B (first particles B 1) were changed to change the DBP absorption of the Si-containing particles B (first particles B 1) and the upper limit value Rmax and the lower limit value Rmin in the 1σ region of the distribution of the presence probability R.

**[Table 1]**

| | Si-containing Particles B | Second region particles A1/A2 (mass%) | First region particles A1/A2 (mass%) | DBPA (cm³/100g) | DBPB (cm³/100g) | DBPB /DBPA | Particle B content (mass%) | Rmax (%) | Rmin (%) | Rmax-Rmin (%) | 50^{th} Cycle deterioration (%) |
|---|---|---|---|---|---|---|---|---|---|---|---|
| Y1 | B2 | 40/60 | 0/100 | 56.8 | 42.3 | 0.74 | 10 | 30 | 9 | 21 | 3.0 |
| Y2 | B1 | 40/60 | 0/100 | 56.8 | 59.9 | 1.05 | 10 | 33 | 7 | 26 | 2.8 |
| X1 | B1 | 40/60 | 0/100 | 56.8 | 53.1 | 0.93 | 10 | 28 | 10 | 18 | 2.5 |
| X2 | B1 | 40/60 | 0/100 | 56.8 | 55.9 | 0.98 | 10 | 28 | 9 | 19 | 2.2 |
| X3 | B1 | 40/60 | 0/100 | 56.8 | 55.9 | 0.98 | 10 | 22 | 9 | 13 | 1.8 |

### « Example 4 »

A battery X4 was made in the same manner as in Example 2, except that in the first negative electrode slurry and the second negative electrode slurry, the Si-containing particle B (first particles B 1) content in the negative electrode active material was changed to 12 mass%, to change the upper limit value Rmax and the lower limit value Rmin in the 1σ region of the distribution of the presence probability R.

### « Comparative Example 3»

A battery Y3 was made in the same manner as in Example 1, except that in the first negative electrode slurry and the second negative electrode slurry, the Si-containing particle B (first particles B 1) content in the negative electrode active material was changed to 12 mass%, and the Si-containing particles B (first particles B 1) were changed, to change the DBP absorption of the Si-containing particles B (first particles B 1), and the upper limit value Rmax and the lower limit value Rmin in the 1σ region of the distribution of the presence probability R.

**[Table 2]**

| | Si-containing Particles B | Second region particles A1/A2 (mass%) | First region particles A1/A2 (mass%) | DBPA (cm³/100g) | DBPB (cm³/100g) | DBPB /DBPA | Particle B content (mass%) | Rmax (%) | Rmin (%) | Rmax-Rmin (%) | 50^{th} Cycle deterioration (%) |
|---|---|---|---|---|---|---|---|---|---|---|---|
| Y3 | B1 | 40/60 | 0/100 | 56.8 | 59.9 | 1.05 | 12 | 37 | 11 | 26 | 3.1 |
| X4 | B1 | 40/60 | 0/100 | 56.8 | 55.9 | 0.98 | 12 | 28 | 11 | 17 | 2.1 |

### [Industrial Applicability]

A secondary battery including the negative electrode of the present disclosure is suitable for a main power source for mobile communication devices and mobile electronic devices, and an in-vehicle power source, but application is not limited thereto.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

10: secondary battery, 11: sealing body, 12: valve body, 13: metal plate, 14: insulating member, 15: positive electrode plate, 15a: positive electrode lead, 16: negative electrode plate, 16a: negative electrode lead, 17: separator, 18: electrode group, 21: gasket, 22: battery can, 22a: step portion, 23: first insulating plate, 24: second insulating plate, 16: negative electrode, 161: negative electrode current collector, 162: negative electrode mixture layer

## Claims

1. A negative electrode for a secondary battery comprising: a negative electrode current collector and a negative electrode mixture layer including a negative electrode active material, wherein
the negative electrode active material includes carbon particles and Si-containing particles, and
in a distribution in a plane direction of the negative electrode mixture layer of a presence probability of Si element in a thickness direction of the negative electrode mixture layer, a difference of an upper limit value Rmax and a lower limit value Rmin in a 1σ region: Rmax - Rmin is 20% or less.

2. The negative electrode for a secondary battery of claim 1, wherein the Si-containing particles include first particles, and
the first particles have a carbon phase and a silicon phase dispersed in the carbon phase.

3. The negative electrode for a secondary battery of claim 2, wherein the carbon phase does not include crystalline carbon.

4. The negative electrode for a secondary battery of claim 2 or 3, wherein a ratio of a DBP absorption (DBPB) of the Si-containing particles relative to a DBP absorption (DBPA) of the carbon particles: DBPB/DBPA is 0.9 or more and 1.0 or less.

5. The negative electrode for a secondary battery of any one of claims 1 to 4, wherein in the negative electrode active material,
a content of the carbon particles is 70 mass% or more and 95 mass% or less, and
a content of the Si-containing particles is 5 mass% or more and 30 mass% or less.

6. The negative electrode for a secondary battery of any one of claims 1 to 5, wherein the Si-containing particles include second particles, and
the second particles have a silicate phase and a silicon phase dispersed in the silicate phase.

7. The negative electrode for a secondary battery of any one of claims 1 to 6, wherein the carbon particles include third particles and fourth particles,
the third particles have a particle internal porosity of 5% or less,
the fourth particles have a particle internal porosity of 8% or more and 20% or less, and
in the carbon particles, a content of the third particle is 10 mass% or more and 80 mass% or less.

8. The negative electrode for a secondary battery of claim 7, wherein when dividing the negative electrode mixture layer in the thickness direction into a first region and a second region having the same thickness,
the third particles are included in a larger amount in the second region far from the negative electrode current collector, than in the first region near the negative electrode current collector.

9. A secondary battery comprising a positive electrode, a negative electrode, and a nonaqueous electrolyte, wherein
the negative electrode is the negative electrode for a secondary battery of any one of claims 1 to 8.
